# EUROPÄISCHE PATENTANMELDUNG

(11) **EP 1 101 972 A2**
(43) Veröffentlichungstag der Anmeldung: **23.05.2001**
(21) Anmeldenummer: 00125422.6
(22) Anmeldetag: 20.11.2000
(51) Int. Cl.: F16F 9/02, F16F 9/56

(54) **Gas-Zugfeder**

(30) Priorität: 20.11.1999 DE 19955828
(71) Anmelder: Joh. Stiegelmeyer GmbH & Co. KG, D-32051 Herford (DE)
(72) Erfinder:
(74) Vertreter: Dantz, Jan Henning

(57) **Zusammenfassung**

Eine Gas-Zugfeder, mit zwei von einem Gehäuse (1) umschlossenen Räumen (2, 3), von denen einer mit Öl und der andere mit Gas gefüllt ist, und mit einem axial bewegbaren Kolben (8), der eine Kolbenscheibe (10) trägt, die den Ölraum 2 in zwei Ölkammern (4, 5) teilt, wobei die Ölkammern (4, 5) durch eine Öffnung in Verbindung stehen, die mittels eines durch einen Stößel (16) betätigbaren Ventiles (11) verschließbar ist, ist so ausgebildet, daß zwischen den Ölkammern (4, 5) ein Überlastventil (18) vorgesehen ist, durch das bei einer definierten Belastung des Kolbens (8) Öl von einer Ölkammer (5) in die andere (4) führbar ist.

## Beschreibung

Die vorliegende Erfindung betrifft eine Gas-Zugfeder gemäß dem Oberbegriff des Anspruchs 1.

Derartige Gas-Zugfedern finden in vielen Bereichen Verwendung.

Während durch das unter Druck stehende Gas im Gasraum der Kolben durch axiales Verschieben in das Gehäuse hineingezogen wird, dient das Öl einer Blockierung bzw. Arretierung des Kolbens in einer bestimmbaren Position, da die auf den Kolbenkopf einwirkenden Druckkräfte des Gases von dem nicht komprimierbaren Öl aufgenommen werden.

Erst bei einem Öffnen des Ventils mittels des Stößels kann das Öl von einer Ölkammer in die andere strömen, wodurch die Blockierung aufgehoben wird und der Kolben entsprechend dem Gasdruck axial verschoben wird.

In jedem Fall ist zur Verschiebung des Kolbens sowohl in das Gehäuse hinein als auch aus diesem heraus eine Betätigung des Stößels erforderlich.

Da die Blockierung der Kolbenbewegung unabhängig ist von dem Druck, der auf ihm lastet, kann es bei einem Überschreiten des angenommenen maximalen Drucks, für den die Bauteile der Gas-Zugfeder dimensioniert sind, zu deren Überlastung und unter Umständen zu Beschädigungen, beispielweise Verbiegungen kommen, die letztendlich die Funktion der Gas-Zugfeder beeinträchtigen oder gar unmöglich machen.

Die sich daraus ergebenden Konsequenzen hinsichtlich der notwendigen Reparatur und gegebenenfalls Neumontage, müssen im einzelnen nicht dargelegt werden, sondern sind naheliegend.

Der vorliegenden Erfindung liegt daher die Aufgabe zugrunde, eine Gas-Zugfeder der gattungsgemäßen Art so auszubilden, daß ihre Betriebssicherheit erhöht und auftretende, Beschädigungen verursachende Überlastungen der Bauteile vermieden werden.

Diese Aufgabe wird durch eine Gas-Zugfeder gelöst, die die Merkmale des Anspruchs 1 aufweist.

Durch diese konstruktive Ausgestaltung einer Gas-Zugfeder wird wirksam verhindert, daß auftretende Belastungsspitzen, insbesondere unzulässig hohe, auf den Kolben wirkende Druckkräfte zu dessen oder anderer Bauteile Beschädigung, beispielsweise Verbiegen, führen.

Vielmehr wird bei einer vorbestimmten Druckbelastung des Kolbens das Überlastventil geöffnet, so daß die Kolbenscheibe zusammen mit dem angeschlossenen Kolben im Ölraum in Belastungsrichtung axial beweglich ist.

Beim Nachlassen der Belastung bis zum definierten Belastungswert schließt das Überlastventil, so daß die gewünschte Funktion der Blockierung des Kolbens wieder eintritt.

Nach einer vorteilhaften Ausgestaltung der Erfindung ist vorgesehen, das Überlastventil in der Kolbenscheibe anzuordnen. Dabei kann es federbelastet sein, wobei durch die Federlast die genannte definierte Belastungshöhe bestimmt wird.

Eine besonders einfache Bauform des Überlastventils stellt eine Durchgangsbohrung durch die Kolbenscheibe dar, die beide Ölkammern miteinander verbindet und die einseitig durch einen Ring verschlossen ist, der druckfederbelastet ist, wobei, wie erwähnt, die Dimensionierung der Druckfeder der definierten maximalen Belastung entspricht.

Diese Ausführungsvariante zeichnet sich einerseits durch eine einfache Herstellung aus und bildet andererseits eine sehr sichere und dauerhafte Überlastsicherung.

Weitere vorteilhafte Ausbildungen der Erfindung sind in den Unteransprüchen gekennzeichnet.

Ein Ausführungsbeispiel der Erfindung wird nachfolgend anhand der beigefügten Zeichnungen beschrieben.

Es zeigen:
- Figur 1: eine Gas-Zugfeder in einem Längsschnitt,

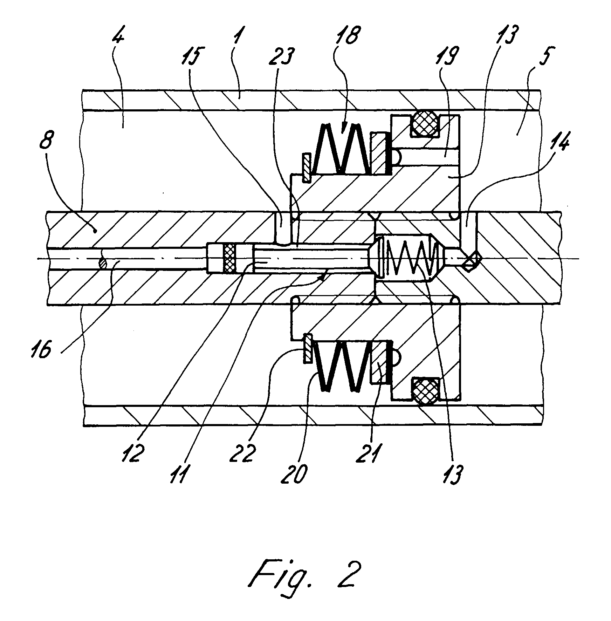

- Figur 2: einen Teil der Gas-Zugfeder ebenfalls in einem Längsschnitt vergrößert dargestellt.

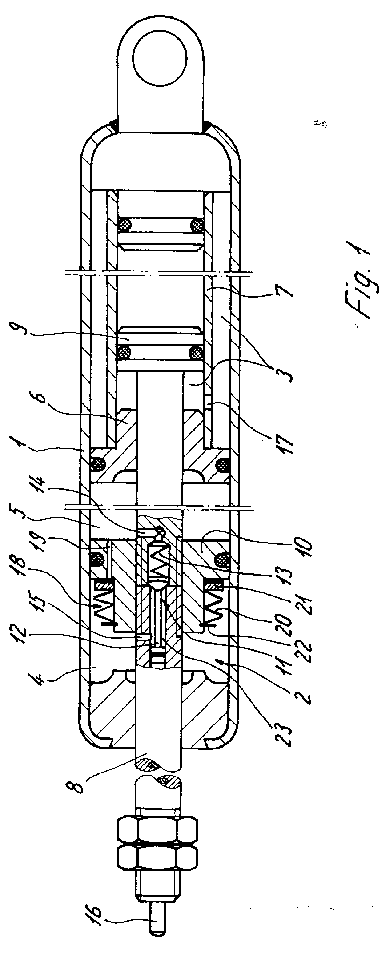

Die in der Figur 1 gezeigte Gas-Zugfeder weist ein Gehäuse 1 auf, das zwei druckdicht voneinander getrennte Räume umschließt, und zwar einen Ölraum 2 und einen Gasraum 3, wobei das Gas im Gasraum 3 unter relativ hohem Druck steht. Beide Räume 2, 3 sind durch einen Trennring 6 voneinander getrennt. In dem Trennring 6 ist axial verschiebbar ein Kolben 8 geführt, der endseitig einen Kolbenkopf 9 trägt, der wiederum eine Begrenzung eines inneren Teiles des Gasraumes 3 bildet, der seitlich durch einen Mantel 7 von dem äußeren Teil des Gasraumes 3 getrennt ist, der sich konzentrisch um den inneren Teil erstreckt.

Um zu verhindern, daß bei Zug an der Kolbenstange 8 der Druck im inneren Gasraum 3 aufgrund der Kompression des Gases zu hoch ansteigt, sind der innere und äußere Raum des Gasraumes 3 durch einen Durchgang 17 miteinander verbunden.

Auf dem Kolben 8, im Bereich der Ölkammer 2, ist eine Kolbenscheibe 10 befestigt, die den Ölraum 2 in zwei Ölkammern 4, 5 unterteilt.

In dem Kolben 8 ist ein Ventil 11 angeordnet, das einen axial geführten Ventilstößel 12 sowie eine sich daran abstützende Druckfeder 13 aufweist, die andererseits am Boden einer entsprechenden Bohrung im Kolben 8 anliegt.

Weiter sind zwei Bohrungen 14, 15 vorgesehen, von denen die Bohrung 14 in die Ölkammer 5 und die Bohrung 15 in die Ölkammer 4 mündet und die beide durch eine Längsbohrung 23 miteinander verbunden sind, die durch den federbelasteten Ventilstößel verschließbar ist.

Weiter ist in dem Kolben 8 ein axial betätigbarer Stößel 16 geführt, mit dem der Ventilstößel 12 gegen die Wirkung der Druckfeder 13 so verschiebbar ist, daß die Längsbohrung 23 freigegeben und der Durchgang zwischen den Ölkammern 4, 5 frei liegt.

In diesem Fall wird der Druck des im Gasraum 3 befindlichen Gases wirksam, indem das Öl aus der Ölkammer 5 in die Ölkammer 4 strömen kann, so daß der Kolben 8 eingezogen wird. Beim Nachlassen des Druckes auf den Stößel 16 wird durch die Druckfeder 13 der Ventilstößel 12 wieder in eine Schließstellung gedrückt und eine Bewegung des Kolbens 8 blockiert.

In der Kolbenscheibe 10 ist achsparallel eine Durchgangsbohrung 19 vorgesehen, die die beiden Ölkammer 4, 5 miteinander verbindet.

Auf ihrer dem Gasraum 3 abgewandten Seite ist die Durchgangsbohrung 19 durch eine auf der Kolbenscheibe 10 aufliegende Dichtscheibe 21 abgedeckt und durch die Kraft einer Druckfeder 20 angepreßt, die sich andererseits an einem Sicherungsring 22, der in einer Nabe der Kolbenscheibe 10 festgelegt ist, abstützt.

Beim Überschreiten einer bestimmten Druckbelastung auf den Kolben 8 erhöht sich der Druck des Öls in der Ölkammer 5, das die Dichtscheibe 21 gegen die Kraft der Druckfeder 20 axial verschiebt und die Durchgangsbohrung 19 öffnet, so daß Öl aus der Ölkammer 5 in die Ölkammer 4 einströmen kann, bei gleichzeitigem axialen Einschieben des Kolbens 8.

Sobald die Überlast die definierte Grenze unterschreitet, die überdies maßgeblich für die Dimensionierung der Druckfeder 20 ist, wird durch deren Kraft die Dichtscheibe 21 wieder gegen die Durchgangsbohrung 19 dichtend gepreßt.

Je nach Erfordernis kann das insgesamt mit dem Bezugszeichen 18 versehene Überlastventil mehrere Durchgangsbohrungen 19 aufweisen.
Die Art der Druckfeder 20 ist ebenfalls den Erfordernissen anzupassen, wobei Tellerfedern oder Schraubenfedern denkbar sind.

In kinematischer Umkehrung können auch Zugfedern vorgesehen sein, die dann allerdings auf der anderen Seite der Kolbenscheibe 13 anzuordnen sind.

### Bezugszeichenliste

- 1: Gehäuse
- 2: Ölraum
- 3: Gasraum
- 4: Ölkammer
- 5: Ölkammer
- 6: Trennring
- 7: Mantel
- 8: Kolben
- 9: Kolbenkopf
- 10: Kolbenscheibe
- 11: Ventil
- 12: Ventilstößel
- 13: Druckfeder
- 14: Bohrung
- 15: Bohrung
- 16: Stößel
- 17: Durchgang
- 18: Überlastventil
- 19: Durchgangsbohrung
- 20: Druckfeder
- 21: Dichtscheibe
- 22: Sicherungsring
- 23: Längsbohrung

## Patentansprüche

1. Gas-Zugfeder, mit zwei, von einem Gehäuse (1) umschlossenen Räumen (2, 3), von denen einer mit Öl und der andere mit Gas gefüllt ist, und mit einem axial bewegbaren Kolben (8), der eine Kolbenscheibe (10) trägt, die den Ölraum (2) in zwei Ölkammern (4, 5) teilt, wobei die Ölkammern (4, 5) durch eine Öffnung in Verbindung stehen, die mittels eines durch einen Stößel (16) betätigbaren Ventils (11) verschließbar ist, **dadurch gekennzeichnet**, daß zwischen den Ölkammern (4, 5) ein Überlastventil (18) vorgesehen ist, durch das bei einer definierten Belastung des Kolbens (8) Öl von einer Ölkammer (5) in die andere (4) führbar ist.

2. Gas-Zugfeder nach Anspruch 1, **dadurch gekennzeichnet**, daß das Überlastventil (18) aus mindestens einer Durchgangsbohrung (19) besteht, die in der Kolbenscheibe (10), achsparallel zum Kolben (8) vorgesehen ist und durch eine federbelastete Dichtscheibe (21) verschließbar ist.

3. Gas-Zugfeder nach Anspruch 2, **dadurch gekennzeichnet**, daß die Dichtscheibe auf der dem Gasraum (3) abgewandten Seite der Kolbenscheibe (10) aufliegt.

4. Gas-Zugfeder nach Anspruch 2, **dadurch gekennzeichnet**, daß sich an der Dichtscheibe (21) eine Druckfeder (20) abstützt, die andererseits an einem Sicherungsring (22) anliegt, der an einer Nabe der Kolbenscheibe (10) festgelegt ist.

5. Gas-Zugfeder nach Anspruch 4, **dadurch gekennzeichnet**, daß die Druckfeder (20) als Tellerfeder ausgebildet ist.

6. Gas-Zugfeder nach Anspruch 4, **dadurch gekennzeichnet**, daß die Druckfeder als Schraubenfeder ausgebildet ist.

7. Gas-Zugfeder nach Anspruch 4, **dadurch gekennzeichnet**, daß die Federkraft der Druckfeder (20) entsprechend der definierten Überlast dimensioniert ist.
